Europäisches Patentamt

European Patent Office

Office européen des brevets

(19)

(11) Publication number: **0 164 225**
A2

## (12) EUROPEAN PATENT APPLICATION

(21) Application number: **85303337.1**

(22) Date of filing: **10.05.85**

(51) Int. Cl.⁴: **E 21 B 21/06**, E 21 B 43/25

(30) Priority: **07.06.84 US 618180**

(43) Date of publication of application: **11.12.85**
**Bulletin 85/50**

(84) Designated Contracting States: **AT DE FR GB IT NL SE**

(71) Applicant: **THE DOW CHEMICAL COMPANY, 2030 Dow Center Abbott Road P.O. Box 1967, Midland, MI 48640 (US)**

(72) Inventor: **Meyer, Wilfred C., 4109 Woodlawn, Midland Michigan 48640 (US)**

(74) Representative: **Raynor, John et al, W.H.Beck, Greener & Co 7 Stone Buildings Lincoln's Inn, London WC2A 3SZ (GB)**

(54) Clarification of high density brine fluids.

(57) A process for clarifying a high density brine based fluid involves flocculating suspended solids from the spent brine based fluid, separating flocculated solids from the fluid and filtering the fluid. Suspended solids are flocculated using a particulate filter aid such as a diatomaceous earth and a water-soluble polymer. Clarified brines can be reused in well drilling and completion fluid applications.

0164225

## CLARIFICATION OF
## HIGH DENSITY BRINE FLUIDS

This invention relates to high density fluids, and in particular, to brine based fluids which are employed in well drilling, workover and completion applications.

In the field of drilling fluids used in forming wellbores in the earth for the production of oil and gas, it is necessary to employ weighting materials which are added to such drilling, workover or completion fluids in order to provide substantially increased weight to said fluids for counteracting elevated downhole pressures. That is, it is necessary to provide increased weight to said drilling fluids in order to contain or counterbalance pressurized zones or formations penetrated by the wellbore. Thus, depending upon the depth of the wellbore and the subterranean formation pressures expected to be encountered, brines of various densities are employed. These used brines are then reclaimed and reused.

Clear brine fluids are preferred over solids-laded fluids because formation damage is lessened, yielding higher productivity. When contaminating solids are introduced into the heavy brine fluid, filtration is generally required before the brine can be reused. The specific gravity of the brine can approach that of the suspended solids, preventing rapid settling. Various types of filtration devices and equipment have been designed to separate such solids.

Unfortunately, many spent fluids contain suspended finely particulate matter which does not readily separate by gravitation, filtration processes or other separation means. Particularly vulnerable to the problems posed during the use of conventional reclamation techniques are the high density brines which are employed in deeper wells. For example, the brines which are employed at greater depths can contain particulate matter which has experienced greater shear and attrition environment. The resulting fine particles or cuttings may not readily separate using many currently used filtration devices, making filtration practices frequently slow and/or ineffective.

In view of the deficiencies of the prior art, it would be highly desirable to provide a process for efficiently and effectively removing suspended particulate matter from brines, and in particular from heavy brines.

The present invention is a process for clarifying a brine based fluid comprising a dissolved salt wherein said fluid containing suspended solids is contacted with

(a) a flocculating agent which comprises a functionally effective amount of a polymeric flocculant and a particulate filter aid wherein said flocculating agent is employed in an amount sufficient to provide flocculation of suspended solids and improved clarification to said brine based fluid, said process further characterized by

(b) separating the flocculated solids from the brine based fluid, and optionally,

(c) further filtering said brine based fluid using a filter device.

The process of this invention allows the skilled artisan to inexpensively and efficiently clarify brines which are employed in drilling, workover and completion applications. The brine fluids may be clarified in a very efficient manner using conventional filter apparatus. Such clarified brines can be reused.

Particulate filter aids are those materials comprising essentially non-compressible finely divided particles which are preferably of low bulk density in order to minimize settling tendency, porous, and essentially chemically inert to the spent brine fluids which are being treated. Suitable particulate filter aids include paper pulp, metallic oxides, asbestos, sawdust, magnesia, gypsum, pearlite, precipitated calcium carbonate, brick dust, and the like. Most preferably, the particulate filter aid is a diatomaceous earth. Suitable particulate filter aids are disclosed in A. B. Cummins, Industrial and Engineering Chemistry, Vol. 34 (4), p. 403 (1942); and P. C. Carman, Industrial and Engineering Chemistry, Vol. 30 (10), p. 463 (1938).

The polymeric flocculants of this invention include a wide variety of polymeric materials known in the art. Numerous such polymeric materials are commercially available. Examples include polyethylene oxides; polyacrylates; polyacrylamides; polyamides; partially hydrolyzed polyacrylamides; methylcellulose; carboxymethylcellulose; alkali metal carboxymethylcellulose; copolymers of acrylamide and monomers such as acrylic acid, sulfonic acid containing monomers, and the like; and salts thereof. Less preferred polymers include the cationic polymers such as those polymers containing quaternized nitrogens. Preferred polymeric flocculants are the polyethylene oxides, and high molecular weight acrylamide polymers such as polyacrylamide, partially hydrolyzed polyacrylamide and copolymers of acrylamide and anionic monomers.

Especially preferred polymeric flocculants include the anionic polymers, most preferably those which have high molecular weights. Highly preferred polymers contain in polymerized form, from 0 to 30, preferably from 15 to 20, weight percent hydrolyzed monomer (e.g., hydrolyzed acrylate monomer), from 0 to 40, preferably from 5 to 10, weight percent sulfonate-containing monomer, and the remainder of a water-soluble nonionic monomer such as acrylamide.

Exemplary nonionic monomers suitably employed in the practice of this invention are those ethylenically unsaturated monomers that are sufficiently water-soluble to form at least a 10 weight percent solution when dissolved in water and readily undergo addition polymerization to form polymers that are essentially water-soluble. Examples of such nonionic monomers include ethylenically unsaturated amides such as acrylamide, methacrylamide and fumaramide; their water-soluble N-substituted nonionic derivatives such as the N-methylol derivatives of acrylamide and methacrylamide as well as the N-methyl and N,N-dimethyl derivatives of acrylamide and methacrylamide; hydroxyalkyl esters of unsaturated carboxylic acids such as hydroxyethyl acrylate and hydroxypropyl acrylate; and the like. Of the foregoing nonionic monomers, the ethylenically unsaturated amides are preferred with acrylamide being especially preferred.

Examples of suitable water-soluble, ethylenically unsaturated monomers containing anionic moieties include N-sulfoalkyl $\alpha,\beta$-ethylenically unsaturated amides such as 2-acrylamido-2-methylpropane sulfonic acid, 2-acrylamido propane sulfonic acid, 2-acrylamido ethane sulfonic acid and the alkali metal salts thereof such as the sodium and potassium salts thereof as well as other such monomers listed in US 3,692,673; sulfoalkyl esters of unsaturated carboxylic acids such as 2-sulfoethyl methacrylate and other such sulfoalkyl esters as listed in US 4,075,134 as well as the alkali metal salts thereof; sulfoarylalkenes such as vinylbenzyl sulfonic acid and the various salts of vinylbenzyl sulfonate, p-styrene sulfonic acid and the salts thereof; sulfoalkenes such as vinyl sulfonic acid and salts thereof; and the like. Of the foregoing sulfonate monomers, the sulfoalkyl derivatives of acrylamide and methacrylamide are preferred with those of acrylamide being especially preferred, particularly 2-acrylamido-2-methylpropane sulfonic acid (AMPS), 2-acrylamido-2-propane sulfonic acid and the salts thereof. In the most preferred embodiments, the sulfo group is in the form of an alkali metal sulfonate salt such as sodium sulfonate. In addition to the aforementioned monomers containing anionic moieties, ethylenically unsaturated carboxylic acids such as acrylic acid and methacrylic acid and salts thereof can also be employed.

The molecular weight of the anionic polymer is sufficient to enable the polymer to function as a flocculant, but less than that which would render the copolymer insoluble in water. Preferred polymers have number average molecular weights (Mw) in the range from 100,000 to in excess of 10 million, most preferably from 2 million to 8 million.

In the process of this invention the brine based fluid which is being treated is contacted with the particulate filter aid. The fluid can be agitated in order to ensure thorough mixing. The fluid is then contacted with the polymeric flocculant. The polymeric flocculant can be in the form of an aqueous solution, a dispersion in oil, or a water-in-oil emulsion. For example, an aqueous solution of polymer can be provided by contacting a flake polymer with an aqueous liquid wherein the amount of polymer can range from 0.1 to 1, preferably 0.3 to 0.7 weight percent polymer, based on the weight of polymer and aqueous solution. The fluid can be further agitated in order to ensure thorough mixing. The flocs which form can be removed using conventional separation means such as, for example, coarse filtration techniques and/or devices such as filter presses. Treated brine based fluids can then, if desired, be filtered using finer conventional filtration devices.

In another, but less preferred, aspect of the invention, the brine based fluid is first contacted with the polymeric flocculant, thereafter contacted with the particulate filter aid and further treated as described hereinbefore. In addition, the particulate filter aid and polymeric flocculant can be added simultaneously, although it is highly advantageous to add the particulate filter aid and polymeric flocculant separately.

The amount of each of the polymeric flocculant and the particulate filter aid which is employed can vary and is an amount sufficient to provide efficient removal of suspended solids in the brine based fluid. A functionally effective amount of the flocculating agent is that amount which provides flocculation of suspended solids and improved clarity to the treated spent brine fluid. The flocculating agent comprises a functionally effective amount of a polymeric flocculant (i.e., that amount which can effectively flocculate suspended solids in the brine fluid) and a functionally effective amount of a particulate filter aid (i.e., that amount which can effectively clarify the brine fluid so treated). Typically, the amount of particulate filter aid ranges from 500 ppm to 10,000 ppm, preferably from 500 ppm to 5,000 ppm based on the weight of the brine based fluid that is treated. Typically, the amount of polymeric flocculant ranges from 10 ppm to 1,000 ppm based on the weight of the brine based fluid.

The separating means which are employed in the practice of this invention may be conventional mechanical filters and prefilters which are known in the art. For example, separation can be performed by gravity separation, screens, relatively coarse cartridge or bag filters, multimedia high rate filters, etc. Filter presses which themselves use diatomaceous earth materials as filter aids can also be employed. Further filtration can be performed, if desired, using a conventional finer cartridge or bag filter.

The process of this invention is useful in clarifying a wide variety of brines which are used in drilling, workover and completion applications. Of particular interest are those fluids which contain sodium, potassium, calcium, zinc, barium, magnesium, iron, cadmium and/or strontium ions, as well as combinations thereof. Also of particular interest are those brines which have densities in excess of 14 pounds per gallon (1677 $kg/m^3$). Particularly useful brines comprise dissolved salts of at least one divalent ion, and more particularly those divalent ions which are cationic.

The following examples are presented to further illustrate the scope of this invention.

Example 1

A spent completion fluid having a density of 17.8 pounds per gallon (ppg) (2132.9 $kg/m^3$) and turbidity of 450 NTU was treated with 1 percent by weight diatomaceous earth filter aid. The sample was briefly shaken and was treated with 1 percent by weight of a high molecular weight polyacrylamide polymer solution, which polymer has undergone 20 to 30 percent hydrolysis. The polymer was added as a 0.5 percent by weight solution in deionized water. The sample was agitated briefly and rested. Flocs appeared in 2 to 5 minutes time and growth of floc size occured in 15 minutes to 2 hours. Separation of the flocs using coarse filtration techniques provided greater than 80 percent reduction in turbidity.

Conversely, a similar completion fluid which was similarly treated with a similar polymer but without particulate filter aid provided no floc formation, and turbidity was not reduced following coarse filtration after treatment over a similar time frame.

The untreated completion fluid remained hazy with no settling of solids occurring over a similar time frame.

Example 2

A 19.2-ppg (2300.6 kg/m$^3$) ZnBr$_2$/CaBr$_2$ brine sample containing finely divided carbon black which neither settled nor was removed using cartridge or bag filters was used. The brine sample was treated with 1750 ppm diatomaceous earth filter aid. To the sample was added 1 percent by weight of the polymer employed in Example 1 as a 0.25 percent solution. Floc formation rapidly occured in order to provide a clear brine solution. No significant flocculation occured when a brine sample was similarly treated but without the addition of the filter aid.

Example 3

A used brine sample having a density of 16.9 ppg (2025 kg/m$^3$) did not respond to treatment using the polymer as described in Example 2. However, when 2840 ppm diatomaceous earth filter aid was added to the brine sample followed by addition of polymer, floc formation occured followed by settling after about 1.5 hours.

- 11 -

## CLAIMS

1. A process for clarifying a brine based fluid, characterized in that the fluid containing suspended solids is contacted with a polymeric flocculant and a particulate filter aid and the flocculated solids are then separated from the brine based fluid.

2. A process as claimed in Claim 1, wherein the separation is carried out using two filtering stages.

3. A process as claimed in Claim 1 or Claim 2, characterized in that the brine based fluid has a density in excess of 14 pounds per gallon (1700 $kg/m^3$).

4. A process as claimed in any one of the preceding claims, characterized in that the brine based fluid comprises a dissolved salt of at least one divalent ion.

5. A process as claimed in Claim 4 characterized in that the divalent ion is a divalent cation.

6. A process as claimed in any one of the preceding claims characterized in that the filter aid is a diatomaceous earth.

7. A process as claimed in any one of the preceding claims, characterized in that the filter aid is employed in an amount of from 500 to 10,000 ppm based on the weight of said brine based fluid.

8. A process of Claim 1 characterized in that the

- 12 -

polymeric flocculant is a high molecular weight acrylamide-containing polymer.

9. A process as claimed in any one of the preceding claims, characterized in that the polymeric flocculant is an anionic polymer.

10. A process as claimed in Claim 9, characterized in that the anionic polymer comprises from 0 to 30 weight percent hydrolyzed monomer, from 0 to 40 weight percent sulfonate containing monomer, and the remainder water-soluble nonionic monomer.

11. A process as claimed in any one of the preceding claims, characterized in that the polymeric flocculant is employed in an amount of from 10 to 1,000 ppm based on the weight of the brine based fluid.

12. A process as claimed in any one of the preceding claims, characterized in that the brine fluid is contacted with the filter aid and then with the polymeric flocculant.